(19) Europäisches Patentamt
European Patent Office
Office européen des brevets

(11) **EP 3 479 157 B1**

(12) **EUROPÄISCHE PATENTSCHRIFT**

(45) Veröffentlichungstag und Bekanntmachung des Hinweises auf die Patenterteilung:
**26.01.2022   Patentblatt 2022/04**

(21) Anmeldenummer: **17734077.5**

(22) Anmeldetag: **29.06.2017**

(51) Internationale Patentklassifikation (IPC):
**G02B 21/00** *(2006.01)*     **G02B 21/24** *(2006.01)*
**G02B 21/36** *(2006.01)*

(52) Gemeinsame Patentklassifikation (CPC):
**G02B 21/244; G02B 21/0032; G02B 21/0076; G02B 21/0088; G02B 21/361**

(86) Internationale Anmeldenummer:
**PCT/EP2017/066135**

(87) Internationale Veröffentlichungsnummer:
**WO 2018/002224 (04.01.2018 Gazette 2018/01)**

(54) **NEIGUNGSMESSUNG UND -KORREKTUR DES DECKGLASES IM STRAHLENGANG EINES MIKROSKOPS**

INCLINATION MEASUREMENT AND CORRECTION OF THE COVER GLASS IN THE OPTICAL PATH OF A MICROSCOPE

MESURE ET CORRECTION DE L'INCLINAISON D'UNE LAMELLE COUVRE-OBJET DANS LE TRAJET OPTIQUE D'UN MICROSCOPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2016   DE 102016212019**

(43) Veröffentlichungstag der Anmeldung:
**08.05.2019   Patentblatt 2019/19**

(73) Patentinhaber: **Carl Zeiss Microscopy GmbH 07745 Jena (DE)**

(72) Erfinder:
• **SIEBENMORGEN, Jörg**
  **07743 Jena (DE)**

• **KALKBRENNER, Thomas**
  **07745 Jena (DE)**

(74) Vertreter: **Meyer, Jork Carl Zeiss AG Patentabteilung Carl-Zeiss-Promenade 10 07745 Jena (DE)**

(56) Entgegenhaltungen:
| | |
|---|---|
| WO-A1-2010/135323 | DE-A1-102007 017 598 |
| DE-A1-102011 003 807 | DE-A1-102013 107 297 |
| US-A1- 2008 111 911 | US-A1- 2009 152 440 |
| US-A1- 2016 084 714 | US-B1- 6 677 565 |

**Beschreibung**

Eine der Hauptanwendungen der Lichtblattmikroskopie liegt in der Bildgebung mittelgroßer Proben, beispielsweise von Organismen, mit einer Größe von einigen 100 μm bis hin zu wenigen Millimetern. In der Regel werden diese Proben in Agarose eingebettet und in einer Glaskapillare angeordnet. Zur Untersuchung der Probe wird die Glaskapillare in eine wassergefüllte Probenkammer eingebracht und die Agarose mit der Probe wird ein Stück weit aus der Kapillare herausgedrückt. Die Probe wird mit einem Lichtblatt beleuchtet. Die in der Probe angeregte und von dieser ausgehende Fluoreszenz wird mit einem Detektionsobjektiv, das senkrecht zum Lichtblatt und damit auch senkrecht zur Lichtblattoptik steht, auf einen Detektor, insbesondere eine Kamera, abgebildet.

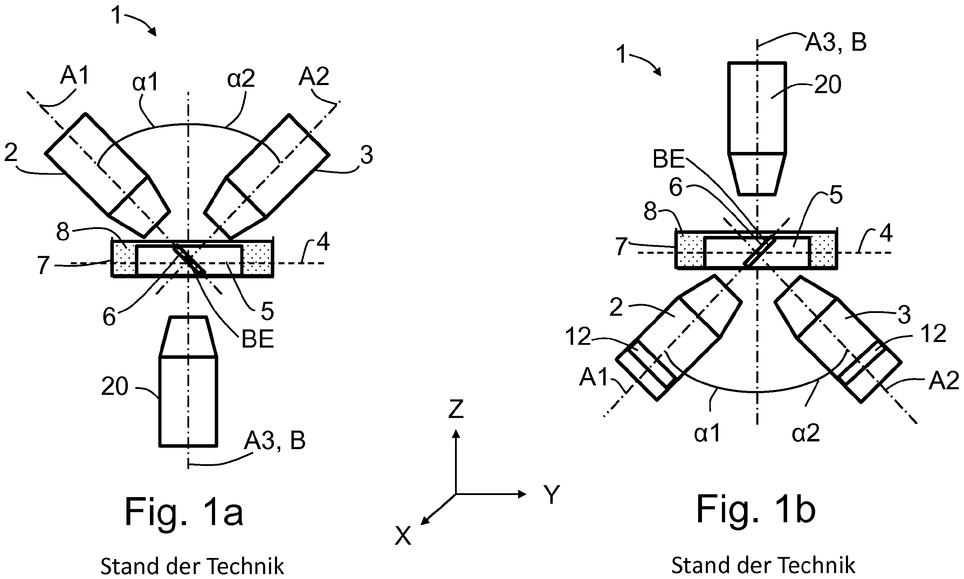

Ein Aufbau eines Mikroskops 1 für die Lichtblattmikroskopie (SPIM-Aufbau; Single Plane Illumination Microscopy) umfasst gemäß dem Stand der Technik ein Beleuchtungsobjektiv 2 und ein Detektionsobjektiv 3 (nachfolgend auch als SPIM-Objektive bezeichnet), die jeweils unter einem Winkel von 45° zu einer Probenebene 4 und einem rechten Winkel zueinander von oben auf die Probenebene 4 gerichtet sind (siehe Fig. 1a). Eine in der Probenebene 4 angeordnete Probe 5 befindet sich zum Beispiel auf dem Boden einer als Petrischale ausgebildeten Probenhalterung 7. Die Probenhalterung 7 ist mit einer Flüssigkeit 8, beispielsweise Wasser, gefüllt und die beiden SPIM-Objektive 2, 3 sind während der Anwendung der Lichtblattmikroskopie in die Flüssigkeit 8 eingetaucht (nicht gezeigt). Die Probenebene 4 erstreckt sich in einer durch die X-Achse X und die Y-Achse Y eines kartesischen Koordinatensystems aufgespannten Ebene X-Y. Die erste optische Achse A1 und die zweite optische Achse A2 verlaufen in einer durch die Y-Achse Y und die Z-Achse Z des kartesischen Koordinatensystems aufgespannten Ebene Y-Z.

Dieser Ansatz bietet den Vorteil einer hohen Auflösung in axialer Richtung, da mittels des Beleuchtungsobjektivs 2 ein dünnes Lichtblatt 6 erzeugt werden kann. Aufgrund der höheren Auflösung können kleinere Proben 5 untersucht werden. Zusätzlich wird die störende Hintergrundfluoreszenz deutlich reduziert und damit das Signal/Hintergrund-Verhältnis verbessert.

Ein Übersichtsbild parallel zur Probenebene 4 und zur Probenhalterung 7 wird gemäß dem Stand der Technik erzeugt, indem mit einem Weitfeldobjektiv 20 unterhalb der Probe 5 senkrecht durch den transparenten Boden der Probenhalterung 7 ein Weitfeldbild aufgenommen wird. Eine Durchlichtbeleuchtung der Probe 5 und einer Erfassung des Durchlichts ist hierbei nicht möglich, da die beiden SPIM-Objektive 2, 3 zu eng nebeneinander angeordnet sind.

Um eine einfachere Probenpräparation in Standard-Probenbehältern wie z. B. Multiwellplatten zu ermöglichen, kann die 45°-Konfiguration zwar beibehalten werden, aber die beiden SPIM-Objektive 2, 3 sind in einer inversen Anordnung von unten durch den transparenten Boden der Probenhalterung 7 in die Probenebene 4 gerichtet (Fig. 1b). In dieser Anordnung müssen die durch die relativ zu den optischen Achsen A1 und A2 geneigte und in Form eines Deckglases vorhandene Probenhalterung 7 hervorgerufenen Aberrationen durch spezielle optische Elemente korrigiert werden. Durch den Boden der Probenhalterung 7 wird die in der Probenebene 4 angeordnete Probe 5 beleuchtet und eine angeregte Fluoreszenz der Probe 5 detektiert. Es können Probenhalter 7, wie z. B. Multiwellplatten, Petrischalen und/oder Objektträger genutzt und eine Kontamination der Proben 5, insbesondere beim High-Throughput-Screening, vermieden werden.

Weitere technische Schwierigkeiten treten auf, wenn in dem Strahlengang des Beleuchtungsobjektivs 2 und/oder des Detektionsobjektivs 3 beispielsweise Alvarezplatten 12 (Fig. 1b) angeordnet sind (US 3305294). Die Alvarezplatten 12 sind so ausgebildet, dass sie genau bei einem festgelegten Winkel zwischen der Probenhalterung 7, beispielsweise einem Deckglas, und der optischen Achse A1, A2 des jeweiligen Objektivs 2, 3 auftretende Aberrationen korrigieren. Schon bei einer kleinen Abweichung des Winkels (z. B. <0.1°) treten unerwünschte Aberrationen auf, die zu einer verringerten Abbildungsqualität führen. Daher muss vor dem Beginn eines Experiments beispielsweise das Deckglas ausgerichtet werden, so dass die Winkelabweichung innerhalb der zulässigen Toleranzen liegt. Des Weiteren ist es hilfreich, wenn neben dem Winkel auch der Abstand zwischen dem Objektiv 2, 3 beziehungsweise einer eventuell vorhandenen Zusatzlinse (z. B. eine Meniskuslinse) und dem Deckglas einstellbar ist, so dass die Probe 5 beziehungsweise dessen abzubildender Bereich, in der Bildebene BE des Detektionsobjektivs 3 liegt.

Aus den Dokumenten US 2008/0111911 A1 und WO 2010/135323 A1 sind technische Lösungen zur Erkennung und Justierung einer Probenhalterung in einem Mikroskop bekannt. Der Aufbau eines inversen Lichtblattmikroskops ist in der DE 10 2013 107 297 A1 beschrieben.

Aus der DE 10 2007 046 601 A1 ist eine Vorrichtung zum Justieren einer Lampe in einem Auflichtsystem bekannt. In diesem ist in einem Auflichtbeleuchtungsstrahlengang mindestens eine Aperturblende angeordnet. In einem Detektionsstrahlengang des Auflichtsystems ist ein Detektor angeordnet. In einem Abschnitt des Auflichtsystems verlaufen der Auflichtbeleuchtungsstrahlengang und der Detektionsstrahlengang gemeinsam und parallel. Ein optisches Element ist im Abschnitt des Auflichtsystems positionierbar, wobei das optische Element die Aperturblende auf den Detektor abbildet.

Die DE 10 2008 007 178 A1 betrifft eine Kalibriervorrichtung eines Laser-Scanning-Mikroskops, die zueinander in einer gemeinsamen Fassung fest ausgerichtet eine Fokussieroptik und eine in der Fokalebene der Fokussieroptik angeordnete Teststruktur mit im Auflicht und/oder im Durchlicht nachweisbaren Strukturelementen aufweist. Die Teststruktur ist in dem Mikroskop derart in den Mikroskop-Strahlengang einschaltbar, dass die Pupille der Fokussieroptik mit der Objektivpupille des Laser-Scanning-Mikroskops zusammenfällt oder in einer dazu konjugierten Ebene liegt.

Eine Möglichkeit zur Korrektur von Aberrationen eines Mikroskops, die durch ein Deckglas bedingt sind, ist aus der Publikation von McGorty et al. (2015: Open-top selective plane illumination microscope for conventionally mounted specimens; OPTICS EXPRESS 23: 16142 - 16153) bekannt. Das inverse SPIM-Mikroskop weist ein Wasserprisma auf, durch dessen Wirkung Aberrationen teilweise kompensiert werden, die infolge des schrägen Durchgangs des Detektionslichts durch das Deckglas auftreten.

Der Erfindung liegt die Aufgabe zugrunde, ein Verfahren zur Justage einer Probenhalterung im Strahlengang eines Mikroskops vorzuschlagen.

Die Aufgabe wird durch den Gegenstand des unabhängigen Anspruchs 1 gelöst. Vorteilhafte Ausgestaltungen sind in den abhängigen Ansprüchen angegeben.

Die Aufgabe wird mit einem Verfahren zur Justage einer Probenhalterung im Strahlengang eines Mikroskops gelöst, bei dem mindestens ein Bündel einer Beleuchtungsstrahlung auf die Probenhalterung gerichtet wird. Ein von der Probenhalterung reflektierter Anteil der Beleuchtungsstrahlung wird mittels eines Detektors erfasst und es werden Messwerte der erfassten Beleuchtungsstrahlung ermittelt. In Abhängigkeit dieser Messwerte wird eine aktuelle Ist-Positionierung, im Folgenden auch als Ist-Position bezeichnet, der Probenhalterung bezüglich des Strahlengangs ermittelt. Die ermittelte Ist-Positionierung wird mit einer Soll-Positionierung, im Folgenden auch als Soll-Position bezeichnet, verglichen und es werden Steuerbefehle zur Veränderung der Ist-Positionierung erzeugt, durch deren Ausführung die Probenhalterung in die Soll-Positionierung bewegt wird.

Der Kern der Erfindung besteht in der Nutzung eines reflektierten Anteils (Reflex) der Beleuchtungsstrahlung um eine Justierung der Probenhalterung, beispielsweise eines Deckglases, hinsichtlich seiner Winkellage und seines Abstands bezüglich des Strahlengangs vorzunehmen.

An den Ober- beziehungsweise Unterseiten beispielsweise von Deckgläsern kommt es meist zu Reflexionen von Anteilen der Beleuchtungsstrahlung. Reflexionen an diesen Grenzflächen erfolgen meist mit einem Reflexionsgrad von jeweils etwa 3%. Der reflektierte Anteil der Beleuchtungsstrahlung liegt dabei zumeist nahezu vollständig innerhalb der Detektions-NA. Dies hat zur Folge, dass der reflektierte Anteil weitgehend auf einem mit dem Detektionsobjektiv optisch verbundenen Detektor abgebildet werden kann. Dieser reflektierte Anteil kann nun genutzt werden, um eine Justage des Deckglases in Bezug auf Winkel und Abstand vorzunehmen.

Eine Ist-Positionierung muss nicht absolut, beispielsweise in Form von Koordinaten eines unabhängigen Koordinatensystems, ermittelt werden. In Ausgestaltungen des Verfahrens kann eine Ist-Position auch in Form relativer Lageverhältnisse zum Strahlengang ermittelt werden.

Die Soll-Positionierung ist erreicht, wenn die Probenhalterung eine erwartete oder gewünschte Positionierung einnimmt. Es kann eine zulässige Toleranz der Soll-Positionierung bestimmt werden.

Die Beleuchtungsstrahlung wird in einer Ausgestaltung der Erfindung als mindestens ein Bündel von Einzelstrahlen (Strahlenbündel), bereitgestellt und auf die Probenhalterung gerichtet. Die Beleuchtungsstrahlung kann dabei in verschiedenen Ausgestaltungen des erfindungsgemäßen Verfahrens eine Strahlung mit selbstrekonstruierenden Strahlen oder diffraktionsfreien Strahlen (englisch: non-diffractive beams) sein und beispielsweise in Form eines Gaußstrahls, eines Besselstrahls, eines Mathieustrahls, eines $Sinc^3$-Strahls, eines Lattice-Lightsheets, eines Coherent Besselstrahls, eines Sectioned Besselstrahl oder eines Airystrahls ausgebildet und auf die Probenhalterung gerichtet werden.

Ein Mathieustrahl kann als ein ausbreitungsinvariantes optisches Feld (propagation-invariant optical field) gemäß der Helmholtzgleichung mit elliptischen Koordinaten angesehen werden (Gutierrez-Vega, J. C. et al, 2001: Experimental demonstration of optical Mathieu beams; Optics Communications 195: 35 - 40).

In einer alternativen Ausgestaltung des erfindungsgemäßen Verfahrens wird die Beleuchtungsstrahlung in Form eines Lichtblatts auf die Probenhalterung gerichtet. Dabei kann in einer Ausgestaltung des Verfahrens das Lichtblatt mit Beleuchtungsstrahlung einer Wellenlänge erzeugt werden, die von der Wellenlänge einer für die Bildgebung verwendeten Beleuchtungsstrahlung verschieden ist. Dadurch ist vorteilhaft eine Beeinträchtigung der Bildqualität reduziert und es kann eine Bleichwirkung der Beleuchtungsstrahlung auf die Probe durch eine gezielte Auswahl der zur Erzeugung des Lichtblatts genutzten Wellenlänge und deren Intensität vermindert werden.

Es ist also möglich, dass verschiedene Beleuchtungsstrahlungen eingesetzt werden, um beispielsweise unterschiedliche Teilschritte des erfindungsgemäßen Verfahrens auszuführen.

In einer erfindungsgemäßen Ausgestaltung des Verfahrens wird ein Mikroskop benutzt, das als ein inverses Mikroskop ausgebildet ist. Das inverse Mikroskop umfasst ein Beleuchtungsobjektiv mit einer ersten optischen Achse, wobei die erste optische Achse eine durch eine X-Achse und einer zur X-Achse orthogonalen Y-Achse aufgespannten Probenebene durchstößt. Weiterhin ist ein zur Detektion von aus der Probenebene kommenden Lichts ausgebildetes Detektionsobjektiv mit einer zweiten optischen Achse vorhanden, wobei das Beleuchtungsobjektiv und das Detektionsobjektiv derart zueinander und zur Probenebene ausgerichtet sind, dass sich die erste optische Achse und die zweite optische Achse in der Probenebene schneiden und miteinander einen im Wesentlichen rechten Winkel einschließen. Die erste optische Achse und die zweite optische Achse schließen mit einer orthogonal zur Probenebene in Richtung einer Z-Achse gerichteten und als eine Bezugsachse dienenden dritten Achse jeweils einen von Null verschiedenen Winkel ein.

Die vorstehend angegebene Ausgestaltung eignet sich insbesondere für die Lichtblattmikroskopie.

In der erfindungsgemäßen Ausgestaltung des Verfahrens weist dieses zwei Schritte auf. Als Ist-Lage beziehungsweise als Soll-Lage werden im Folgenden die Lagen der Abbildung des reflektierten Anteils auf dem Detektor, insbesondere auf einer Detektionsfläche des Detektors, bezeichnet.

In einem Schritt 1 wird die einen für die Beleuchtungsstrahlung transparenten Boden mit einer ersten Seitenfläche und einer zweiten Seitenfläche aufweisende Probenhalterung in Richtung der Z-Achse verschoben, bis der von der ersten Seitenfläche, z. B. der Oberseite, des Bodens reflektierte Anteil der Beleuchtungsstrahlung erfasst wird. Die Relativlage der Probenhalterung und des Detektors wird zueinander so verändert, dass eine Ist-Lage des erfassten Anteils einer Soll-Lage auf dem Detektor angenähert wird. Die Soll-Lage ist vorteilhaft mittig auf der Detektorfläche, um während der Einstellung der Soll-Lage eine Ist-Lage des reflektierten Anteils außerhalb der Detektorfläche weitgehend zu vermeiden.

Der Boden kann beispielsweise der Boden einer Schale, beispielsweise aus Glas oder Kunststoff sein. Es ist auch möglich, dass ein Deckglas mit seiner ersten und zweiten Seitenfläche ein Boden im vorgenannten Sinn ist. Von Bedeutung ist eine hinreichende Transparenz des Materials des Bodens für die Beleuchtungsstrahlung beziehungsweise die Beleuchtungsstrahlungen, sowie die erste Seitenfläche und zweite Seitenfläche, die als Grenzflächen wirken, an denen Brechungen und/oder Reflexionen der Beleuchtungsstrahlung erfolgen können.

In einem Schritt 2 wird das Vorliegen einer Verkippung der ersten Seitenfläche des Bodens um die Y-Achse überprüft, indem eine Winkelabweichung der Ist-Lage von der Soll-Lage ermittelt wird. Wird dabei eine Winkelabweichung festgestellt, die größer als eine zulässige Winkelabweichung ist, wird die Probenhalterung um die Y-Achse rotiert bis die Winkelabweichung minimiert ist. Optional kann eine bevorzugte Rotationsrichtung zum Ausgleich der Verkippung ermittelt werden, um zum Beispiel die Winkelabweichung auf dem kürzesten Rotationsweg auszugleichen. Anschließend wird ein Auftreten einer Abweichung der Soll-Position von der Ist-Position in Richtung der Z-Achse überprüft. Bei Auftreten einer unzulässigen Abweichung wird beziehungsweise werden der Schritt 1 und gegebenenfalls der Schritt 2 wiederholt. Nach dem Schritt 2 ist die Probenhalterung parallel zur X-Achse ausgerichtet.

Optional wird in einem Schritt 3 eine Ausrichtung der ersten Seitenfläche in Richtung der Y-Achse überprüft, indem die Probenhalterung in Richtung der Y-Achse verschoben wird und eine Abweichung von der Richtung der Y-Achse durch ein Auswandern des erfassten reflektierten Anteils auf dem Detektor festgestellt wird. Bei Auftreten des Auswanderns, also der Ist-Lage, des erfassten reflektierten Anteils wird die Probenhalterung um die X-Achse rotiert bis kein Auswandern mehr auftritt beziehungsweise dieses innerhalb einer zulässigen Toleranzgrenze liegt.

In einer weiteren Ausgestaltung des Verfahrens wird die justierte Probenhalterung aus einer ersten (Soll-)Positionierung, in der ein von der ersten Seitenfläche reflektierter Anteil in einer ersten Soll-Lage erfasst wird, in Richtung der Z-Achse verschoben, bis die Abbildung des erfassten reflektierten Anteils eine zweite Soll-Lage erreicht, in der ein von der zweiten Seitenfläche, beispielsweise der Unterseite, des Bodens reflektierter Anteil erfasst wird. In Abhängigkeit von der zwischen der ersten Soll-Lage und der zweiten Soll-Lage zurückgelegten Verschiebestrecke in Richtung der Z-Achse wird ein tatsächlicher Abstand von erster und zweiter Seitenfläche in Richtung der Z-Achse zueinander ermittelt. Der so ermittelte Abstand entspricht der Dicke des Bodens.

Der Abstand beziehungsweise die Dicke des Bodens kann berechnet werden. Eine Berechnungsmöglichkeit ist nachfolgend im Zusammenhang mit den Ausführungsbeispielen angegeben.

Die Erfassung des reflektierten Anteils erfolgt mittels eines Detektors, beispielsweise mittels einer Kamera, beispielsweise umfassend einen CCD- oder CMOS-Chip, oder mittels einer Vier-Quadrantendiode.

Unter konventionellen Mikroskopsystemen werden sowohl Auflicht-als auch Durchlichtmikroskope in Ausführung unterhalb (inverse Anordnung) oder mit oberhalb der Probenebene angeordneten Objektiven verstanden.

In einer nicht zur Erfindung gehörenden Ausgestaltung eines Verfahrens wird die Beleuchtungsstrahlung mittels eines Autokollimationsfernrohrs auf die Probenhalterung gerichtet und die Ist-Positionierung (Neigung) der Probenhalterung wird in Abhängigkeit einer Abweichung einer Ist-Lage des erfassten reflektierten Anteils auf dem Detektor von einer Soll-Lage des erfassten reflektierten Anteils auf dem Detektor ermittelt.

In Abhängigkeit der ermittelten Abweichung wird ein Neigungswinkel der Probenhalterung ermittelt. Ist der ermittelte Neigungswinkel größer als eine zulässige Toleranz des Neigungswinkels, wird die Ist-Positionierung der Probenhalterung zur Einstellung eines Neigungswinkels innerhalb der zulässigen Toleranz verändert, indem entsprechende Steuerbefehle generiert und ausgeführt werden.

Diese Verfahrensausgestaltung eignet sich für inverse als auch für aufrechte Mikroskope.

Es ist in einer nicht zur Erfindung gehörenden Ausgestaltung weiter möglich, dass Strahlung eines kollimierten Lasers als Beleuchtungsstrahlung parallel zum Lot auf die Probenhalterung gerichtet und ein auftretender Reflex ausgespiegelt und erfasst wird. Zur Erfassung kann eine Vier-Quadrantendiode verwendet werden.

Eine weitere nicht erfindungsgemäße Ausgestaltung des Verfahrens ist dadurch gekennzeichnet, dass ein Bildgütemaß definiert wird, eine Ist-Positionierung der Probenhalterung, beispielsweise schrittweise (iterativ), verändert wird und zugeordnet zu jeder der gewählten Ist-Positionierungen Messwerte des Bildgütemaßes oder Messwerte der erfassten reflektierten Anteile erfasst werden.

Anhand der Messwerte des Bildgütemaßes oder der Messwerte der erfassten reflektierten Anteile wird jeweils ein aktueller Wert des Bildgütemaßes ermittelt und es wird eine Ist-Positionierung ausgewählt, an der ein gewünschtes, beispielsweise ein maximales oder maximiertes, Bildgütemaß vorliegt.

Die ausgewählte Ist-Positionierung kann als zukünftige Soll-Positionierung festgelegt werden.

Die Messwerte des Bildgütemaßes oder die Messwerte der erfassten reflektierten Anteile können beispielsweise von der Probenhalterung (und)/oder einem Strahlprofil der Beleuchtungsstrahlung abgeleitet werden. Diese Ausgestaltung ist für inverse Mikroskopsysteme geeignet.

Ein Reflex der Beleuchtungsstrahlung kann ferner in einem nicht zur Erfindung gehörenden Verfahren genutzt werden, bei dem eine Topographie der Probenhalterung, insbesondere eine Topographie der ersten und/oder zweiten Seitenfläche, ermittelt wird, wobei an mindestens drei Punkten, fortan auch als Messpunkte bezeichnet, der Probenhalterung relative Höhenwerte ermittelt werden und in Abhängigkeit von den ermittelten Höhenwerten die Ist-Positionierung (Neigung) der Probenhalterung ermittelt wird.

Die Topographie wird durch relative Höhen, von vermessenen Punkten auf der Oberfläche der Probenhalterung bestimmt, die durch relative Höhenwerte angegeben werden. Die relativen Höhen werden beispielsweise in Form von Koordinaten in Richtung der Z-Achse angegeben. Eine Bestimmung der Topographie kann mittels verschiedener Varianten erfolgen.

Beispielsweise ist die Verwendung eines Interferometers möglich (nicht zur Erfindung gehörend). Dabei wird die Beleuchtungsstrahlung mittels eines (Faser-)interferometers auf die Probenhalterung gerichtet und die Ist-Positionierung der Probenhalterung in Abhängigkeit einer Abweichung einer Ist-Lage des erfassten reflektierten Anteils auf dem Detektor von einer Soll-Lage des erfassten reflektierten Anteils auf dem Detektor ermittelt.

Weiterhin kann in einer weiteren nicht erfindungsgemäßen Variante ein Bild der Probenhalterung erzeugt und an mindestens drei Bildpunkten Bildgütewerte mindestens eines Bildgütemaßes ermittelt werden. Es werden zu den drei Bildpunkten korrespondierenden Höhenwerten in Abhängigkeit der Bildgütewerte ermittelt.

Die Topographie kann erfindungsgemäß auch durch Triangulation ermittelt werden. Dazu wird von mindestens zwei voneinander verschiedenen Beobachtungspunkten ein Messpunkt erfasst. Ein Messpunkt ist ein zu vermessender Punkt auf einer Oberfläche der Probenhalterung. Der jeweilige Beobachtungswinkel, unter denen der beobachtete Messpunkt von dem jeweiligen Beobachtungspunkt aus liegt, wird ermittelt und es wird eine Ist-Positionierung des Messpunkts in Abhängigkeit von den Beobachtungspunkten und den zugehörigen Beobachtungswinkeln ermittelt. In Abhängigkeit der Ist-Positionierung des mindestens einen Messpunkts wird die Ist-Positionierung der Probenhalterung ermittelt. Es werden mindestens drei Messpunkte vermessen.

Die Erfindung betrifft eine Möglichkeit zur Justage der Probenhalterung, beispielsweise zur Neigungsmessung und zur Neigungskorrektur des Deckglases, insbesondere bei SPIM. Vorteilhaft ist das erfindungsgemäße Verfahren für die Lichtblattmikroskopie unter Verwendung eines inversen Mikroskops einsetzbar, das mit einem Detektionsobjektiv und einem Beleuchtungsobjektiv ausgerüstet ist, die senkrecht zueinander stehen und von unten jeweils unter einem Winkel durch ein Deckglas beleuchten beziehungsweise detektieren.

Insbesondere bei Mikroskopen mit einer inversen Anordnung und geneigten Strahlengängen ist die Neigungsmessung und gegebenenfalls eine Neigungskorrektur unerlässlich, da bereits bei kleinsten Neigungen beträchtliche Aberrationen auftreten.

Die Erfindung wird nachfolgend anhand von Ausführungsbeispielen und Abbildungen näher erläutert. Dabei zeigen:

Fig. 1a eine schematische Darstellung eines Mikroskops mit einer 45°-Anordnung von Beleuchtungsobjektiv und Detektionsobjektiv oberhalb sowie mit einem Weitfeldobjektiv unterhalb einer Probenebene gemäß dem Stand der Technik;

Fig. 1b eine schematische Darstellung eines Mikroskops mit einer inversen 45°-Anordnung von Beleuchtungsobjektiv und Detektionsobjektiv unterhalb sowie mit einem Weitfeldobjektiv oberhalb einer Probenebene gemäß dem Stand der Technik;

Fig. 2 eine schematische Darstellung eines Ausführungsbeispiels eines zur Lichtblattmikroskopie ausgebildeten Mikroskops mit Alvarezplatten und Meniskuslinse;

Fig. 3 eine schematische Darstellung eines Ausführungsbeispiels eines inversen Lichtblattmikroskops;

Fig. 4 eine schematische Darstellung einer Prinzipskizze der Reflexions- und Aperturverhältnisse an einer Probenhalterung eines inversen Mikroskops;

Fig. 5 eine schematische Darstellung der Lage eines Lichtblatts in einer Probe und einer Abbildung eines reflektierten Anteils des Lichtblatts auf einem Detektor;

Fig. 6 eine schematische Darstellung der Reflexion einer Beleuchtungsstrahlung an der Oberseite einer Probenhalterung;

Fig. 7 eine schematische Darstellung einer verkippten Abbildung eines reflektierten Anteils der Beleuchtungsstrahlung auf einem Detektor;

Fig. 8 eine schematische Darstellung des Prinzips der Justierung der Probenhalterung parallel zur Y-Achse;

Fig. 9 eine schematische Darstellung des Prinzips der Bestimmung der Dicke der Probenhalterung;

Fig. 10 eine schematische Darstellung einer Anordnung zur Ermittlung der Topographie der Probenhalterung mittels eines Interferometers und

Fig. 11 eine schematische Darstellung einer Anordnung zur Ermittlung der Topographie der Probenhalterung mittels Triangulation.

In den nachfolgenden schematischen Darstellungen von Beispielen aus dem Stand der Technik und von Ausführungsbeispielen der Erfindung bezeichnen gleiche Bezugszeichen gleiche Elemente.

Aus dem Stand der Technik ist ein schematisch in Fig. 1a dargestelltes aufrechtes Mikroskop 1 bekannt, das ein Beleuchtungsobjektiv 2, ein Detektionsobjektiv 3 und ein Weitfeldobjektiv 20 aufweist. Mittels des Beleuchtungsobjektivs 2 ist entlang einer ersten optischen Achse A1 ein Lichtblatt 6 erzeugt oder erzeugbar, das zur Untersuchung einer in einer Probenebene 4 angeordneten Probe 5 nutzbar ist. Das Detektionsobjektiv 3 weist eine zweite optische Achse A2 auf, entlang der von der Probenebene 4 kommendes Licht erfassbar ist. Die erste optische Achse A1 und die zweite optische Achse A2 sind zueinander orthogonal ausgerichtet und schließen jeweils mit der Probenebene 4, die als Bezugsebene dient, einen Winkel von 45° ein.

Das Weitfeldobjektiv 20 weist eine dritte optische Achse A3 auf, die orthogonal zur Probenebene 4 gerichtet ist und als Bezugsachse B dient. Die ersten bis dritten optischen Achsen A1 bis A3 schneiden sich im Bereich der Ausdehnung des Lichtblatts 6 in der Probe 5. Außerdem schließt die erste optische Achse A1 mit der Bezugsachse B einen ersten Winkel $\alpha1$ und die zweite optische Achse A2 mit der Bezugsachse B einen zweiten Winkel a2 von 90°- $\alpha1$, z. B. jeweils 45° ein.

Die Probe 5 ist in einer auf einem Probentisch 11 befindlichen Probenhalterung 7 angeordnet, die mit einer Flüssigkeit 8 gefüllt ist.

Die Fig. 1b zeigt schematisch ein Mikroskop 1 mit einer inversen Anordnung von Beleuchtungsobjektiv 2 und Detektionsobjektiv 3, bei dem das Beleuchtungsobjektiv 2 und das Detektionsobjektiv 3 unterhalb und das Weitfeldobjektiv 20 oberhalb der Probenebene angeordnet sind. Die Winkel $\alpha1$ und $\alpha2$ betragen wieder je 45°.

Die nachfolgenden Ausführungsbeispiele der Erfindung sind anhand inverser Mikroskope 1 dargestellt.

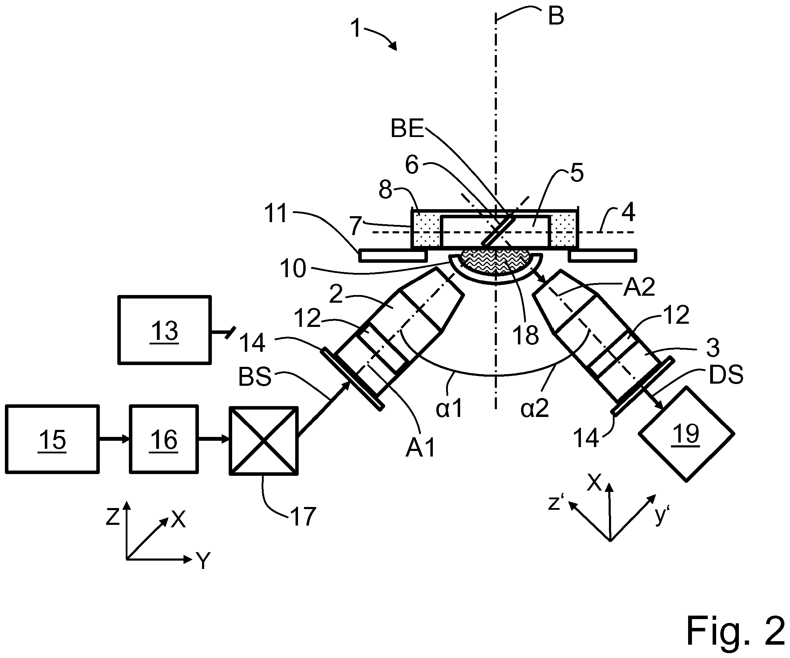

Ein Ausführungsbeispiel eines zur Lichtblattmikroskopie ausgebildeten inversen Mikroskops 1 mit Alvarezplatten 12 und einer Meniskuslinse 10 ist in Fig. 2 dargestellt. Die Winkel $\alpha1$ und $\alpha2$ betragen je 45°. Die Alvarezplatten 12 dienen der Korrektur von Aberrationen, die aufgrund des schrägen Durchgangs der Beleuchtungsstrahlung BS durch den Boden der Probenhalterung 7 auftreten können. Die Meniskuslinse 10 unterstützt den Übergang der Beleuchtungsstrahlung BS von Luft in ein Immersionsmedium 18 und in die Flüssigkeit 8 sowie für eine Detektionsstrahlung DS von der Flüssigkeit 8 in das Immersionsmedium 18 und in die Luft.

Die Probenhalterung 7 ist auf dem Probentisch 11 gehalten. Der Probentisch 11 selbst ist in einer durch die X-Achse X und die Y-Achse Y aufgespannten X-Y-Ebene mittels nicht näher dargestellter Antriebe gesteuert verstellbar.

Das Beleuchtungsobjektiv 2 und das Detektionsobjektiv 3 sind jeweils mittels eines Objektivantriebs 14, der hier als ein Piezoantrieb ausgebildet ist, entlang der ersten optischen Achse A1 beziehungsweise entlang der zweiten optischen Achse A2 gesteuert verstellbar.

Die Beleuchtungsstrahlung BS wird durch ein Lasermodul 15 bereitgestellt und mittels einer Strahlformungseinheit 16 geformt. Die Strahlformung 16 ist beispielsweise eine Optik, mittels der die bereitgestellte Beleuchtungsstrahlung BS beispielsweise kollimiert wird.

Der Strahlformungseinheit 16 nachgeordnet ist ein Scanner 17 vorhanden, mittels dem die geformte Beleuchtungsstrahlung BS gesteuert in zwei Richtungen ablenkbar ist (X-Y-Scanner).

Nach dem Scanner ist das Beleuchtungsobjektiv 2 auf der ersten optischen Achse A1 angeordnet. Die von dem Scanner 17 abgelenkte Beleuchtungsstrahlung BS gelangt zu dem Beleuchtungsobjektiv 2 und wird durch dieses geformt und/oder fokussiert.

Die Detektionsstrahlung DS ist entlang der zweiten optischen Achse A2 auf einen Detektor 19 gerichtet und ist durch diesen erfassbar.

Zur Ansteuerung des Probentischs 11, der Piezoantriebe 14, der Alvarezplatten 12, des Lasermoduls 15, der Strahlformung 16, des Scanners 17 und/oder des Detektors 19 ist eine Steuereinheit 13 vorhanden, die mit den anzusteuernden Elementen in einer zur Datenübertragung geeigneten Verbindung steht.

In weiteren Ausführungen ist die Steuereinheit 13 zusätzlich zur Erfassung, Speicherung und/oder zur Auswertung von Messwerten konfiguriert. Mittels der Steuereinheit 13 können weitere Elemente sowie Einheiten des Mikroskops 1 ansteuerbar sein und/oder Messwerte von diesen erhalten und ausgewertet werden.

Es werden im Folgenden zur Beschreibung zwei Koordinatensysteme mit zueinander orthogonalen Achsen genutzt. Das erste Koordinatensystem ist das Koordinatensystem der gesamten Anordnung mit einer X-Achse X, einer Y-Achse Y und einer Z-Achse Z. Idealerweise ist die Probenhalterung 7, insbesondere deren Boden, parallel zu einer durch die X-Achse X und die Y-Achse Y aufgespannte X-Y-Ebene ausgerichtet. Das zweite Koordinatensystem ist das Koordinatensystem des Detektors 19 mit der X-Achse X, einer y-Achse y' und einer z-Achse z'. Eine Abbildung beispielsweise eines Bildes aus der Bildebene BE auf dem Detektor 19 besitzt die Koordinaten X und y'. Die X-Achse X ist in beiden Koordinatensystemen identisch und orthogonal zur Zeichenebene der Figuren gerichtet. Die beiden anderen Achsen Y und y' beziehungsweise Z und z', können durch eine Rotation um die X-Achse X ineinander überführt werden.

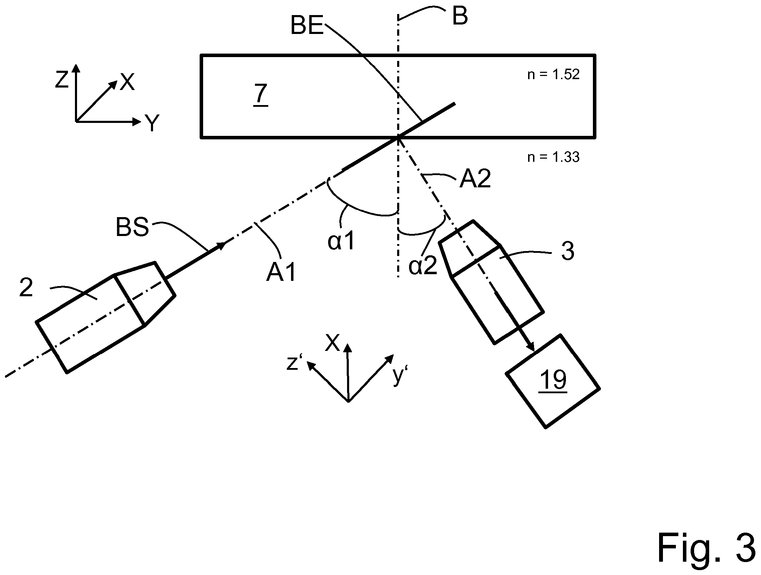

Den folgenden Ausführungsbeispielen liegt beispielhaft ein inverses Lichtblattmikroskop zu Grunde, bei dem die erste optische Achse A1 des Beleuchtungsobjektivs 2 einen Winkel $\alpha 1$ von 60° zur Bezugsachse B und die zweite optische Achse A2 des Detektionsobjektivs 3 einen Winkel $\alpha 2$ von 30° einschließt (Fig. 3). Eine optionale Meniskuslinse 10 ist zur besseren Übersichtlichkeit nicht in allen Abbildungen dargestellt. Des Weiteren wird für die Probenhalterung 7, beispielsweise in Form eines Deckglases oder des Bodens der Probenhalterung 7, ein Brechungsindex von n = 1,52 und für Wasser als Immersionsmedium 18 ein Brechungsindex von n = 1,33 zu Grunde gelegt.

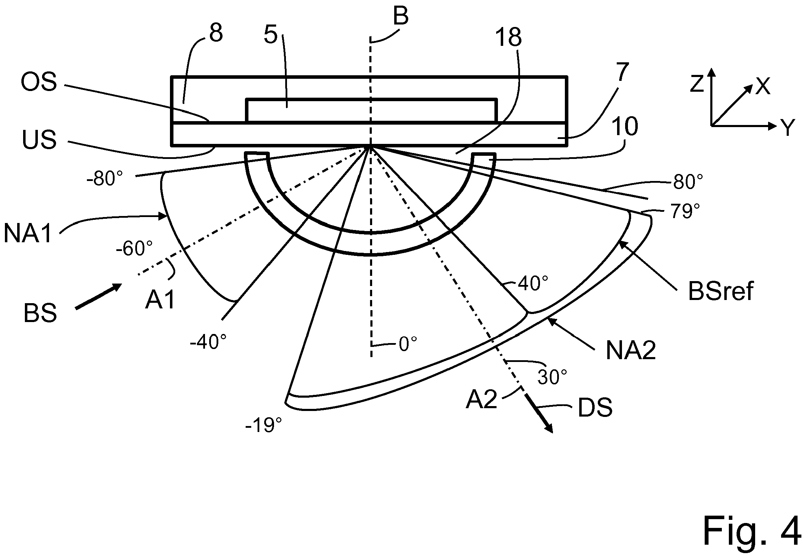

In der Fig. 4 sind Numerischen Aperturen NA1, NA2 als Öffnungswinkel des Beleuchtungsobjektivs 2 beziehungsweise des Detektionsobjektivs 3 gezeigt. Das Beleuchtungsobjektiv 2 weist eine Numerische Apertur NA1 von 0,45 auf, während das Detektionsobjektiv 3 eine Numerische Apertur NA2 von 1,0 aufweist. Die Darstellung erfolgt aus Gründen der Übersichtlichkeit nicht maßstabsgerecht.

Die Bezugsachse B verläuft unter einem Winkel von 0°. Die erste optische Achse A1 verläuft unter einem Winkel $\alpha 1$ von -60°. Die erste Numerische Apertur NA1 spannt einen Kegel von -40° bis -80° auf. Die zweite optische Achse A2 verläuft unter einem Winkel $\alpha 2$ von 30°. Die zweite Numerische Apertur NA2 spannt einen Kegel von -19° bis 79° auf.

Das Material der Probenhalterung 7 ist für die Beleuchtungsstrahlung BS transparent. An den Grenzflächen zwischen dem Immersionsmedium 18 und der Probenhalterung 7 sowie zwischen der Probenhalterung 7 und der Probe 5 kommt es zur Reflektion eines Anteils der Beleuchtungsstrahlung BSref. Der Reflexionsgrad beträgt jeweils etwa 3%. Der von dem reflektierten Anteil der Beleuchtungsstrahlung BSref gebildete Beleuchtungskegel reicht von 40° bis 80° und liegt nahezu vollständig innerhalb der zweiten Numerischen Apertur NA2 des Detektionsobjektivs 3. Dies ermöglicht, den reflektierte Anteil der Beleuchtungsstrahlung BSref (= Reflex BSref) nahezu vollständig auf den Detektor 19 (siehe Fig. 2, 3 und 5) abzubilden. Der Reflex BSref kann genutzt werden, um eine Ist-Positionierung der Probenhalterung 7 vorzunehmen und in Abhängigkeit der ermittelten aktuellen Ist-Positionierung eine Justierung der Probenhalterung 7 vorzunehmen.

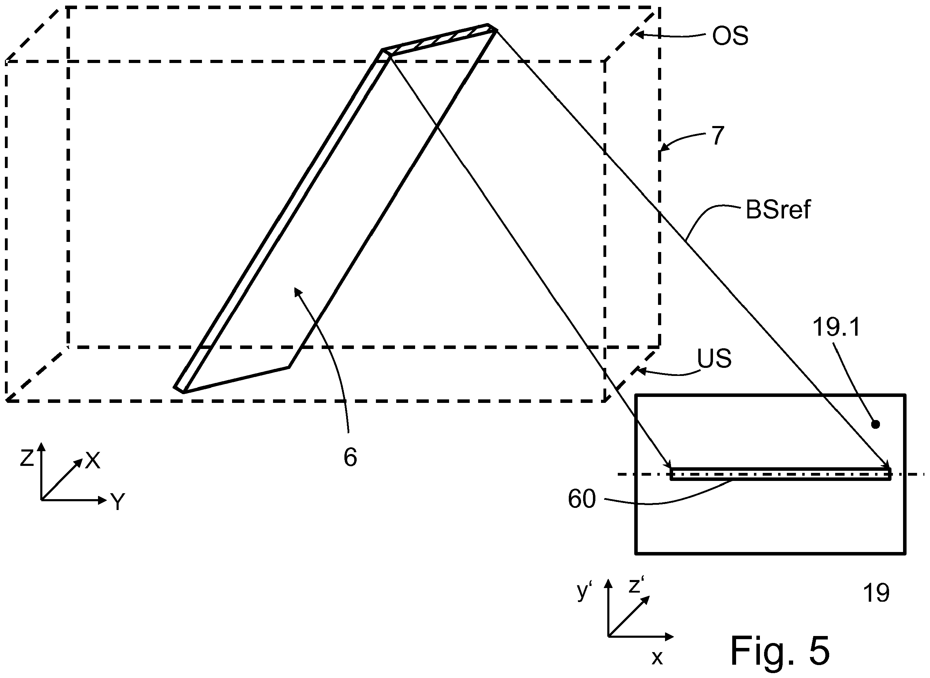

Um die Transformation des Reflexes BSref von dem Koordinatensystem der gesamten Anordnung in das Koordinatensystem des Detektors 19 zu veranschaulichen, ist in der Fig. 5 schematisch der Umriss einer Probenhalterung 7, beispielsweise eines Deckglases, gezeigt. In der Probenhalterung 7 ist bereits das Lichtblatt 6 ausgebildet. Das Lichtblatt 6 trifft mit seinem Querschnitt auf eine Oberseite als eine erste Seitenfläche OS der Probenhalterung 7, an der ein Anteil des Lichtblatts 6, also ein Anteil der Beleuchtungsstrahlung 3, reflektiert wird und als Reflex BSref durch eine Unterseite als eine zweite Seitenfläche US der Probenhalterung 7 auf eine Detektorfläche 19.1 eines Detektors 19 gelenkt und dort als Bild 60 des Lichtblattquerschnitts abgebildet wird.

Die Detektorfläche 19.1 ist in der Fig. 5 in einer Draufsicht dargestellt, während die Probenhalterung 7 und das Lichtblatt 6 in einer seitlichen Ansicht dargestellt sind. Aus diesen gegeneinander gedrehten Ansichten ergibt sich die dargestellte Orientierung des Koordinatensystems des Detektors 19 mit den Achsen X, y' und z'.

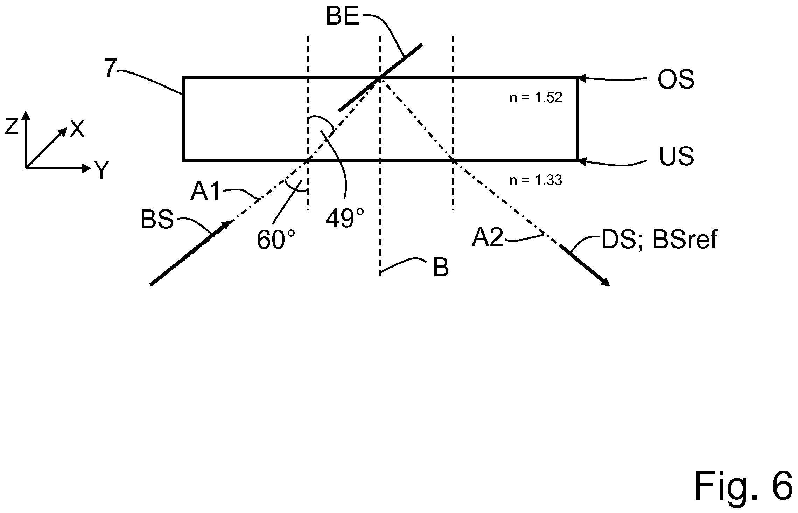

Die Ausführung eines erfindungsgemäßen Verfahrens und möglicher Ausgestaltungen wird anhand der Fig. 6 bis 9 beschrieben.

Ein beispielhafter Strahlengang der Beleuchtungsstrahlung BS und der Detektionsstrahlung DS ist in der Fig. 6 dargestellt. Die Beleuchtungsstrahlung BS wird entlang der ersten optischen Achse A1 unter einem Winkel von 60° zum Lot auf die Unterseite US der Probenhalterung 7 gerichtet. Bei dem Durchgang der Beleuchtungsstrahlung BS durch die von der Unterseite US gebildeten Grenzfläche zwischen Luft mit einem Brechungsindex n = 1,33 und dem Material der Probenhalterung 7 mit einem Brechungsindex n = 1,52, wird die Beleuchtungsstrahlung BS zum Lot hin gebrochen und verläuft bis zur Oberseite OS der Probenhalterung 7 unter einem Winkel von 48°.

An der ersten Seitenfläche OS erfolgt in einer Bildebene BE die Reflektion des Anteils der Beleuchtungsstrahlung BSref (siehe auch Fig. 5) zurück zur zweiten Seitenfläche US. Beim Durchgang des reflektierten Anteils der Beleuchtungsstrahlung BSref durch die zweite Seitenfläche US wird dieser wieder vom Lot weg gebrochen und gelangt entlang der zweiten optischen Achse A2 als Detektionsstrahlung DS beispielsweise zum Detektor 19 (nicht gezeigt).

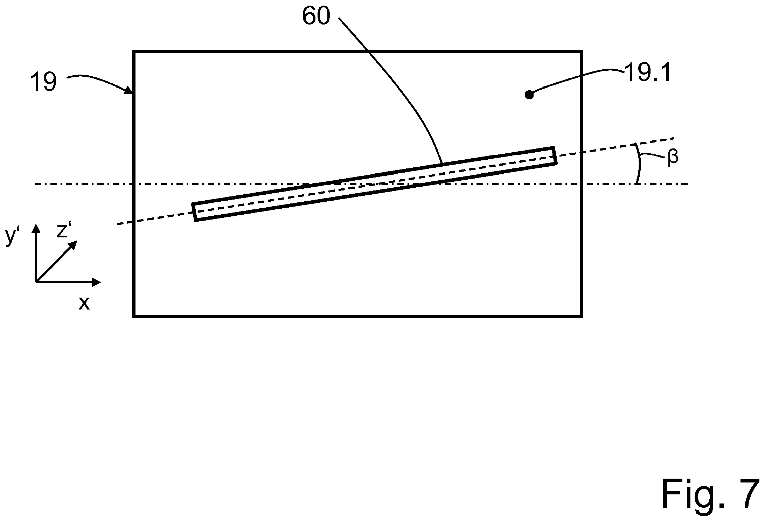

Um die Probenhalterung 7 zu justieren, wird in einem Schritt 1 die Probenhalterung 7 in Richtung der Z-Achse (Z) verschoben, bis der von der ersten Seitenfläche OS, im dargestellten Ausführungsbeispiel von der Oberseite, reflektierte Anteil der Beleuchtungsstrahlung BSref erfasst wird. Hierbei geht man davon aus, dass die Bildebene BE fest ist. Eine Relativlage der Probenhalterung 7 und des Detektors 19 zueinander wird so verändert, dass eine Ist-Lage des als Bild 60 erfassten Anteils der Beleuchtungsstrahlung BSref einer Soll-Lage des Bild 60 auf der Detektorfläche 19.1 des Detektors 19 angenähert wird (Fig. 7).

Die Ist-Position der Probenhalterung 7 in Richtung der Z-Achse Z ist optimal justiert, wenn das Bild 60 des Querschnitts des Lichtblatts 6 mittig auf der Detektorfläche 19.1 liegt.

Da es sowohl einen Reflex BSref von der ersten Seitenfläche OS als auch von der zweiten Seitenfläche US des Deckglases gibt, ist es notwendig zwischen beiden unterscheiden zu können. Wird die Probenhalterung 7 in eine positive Richtung (in Fig. 6 nach oben) entlang der Z-Achse Z bewegt, so kann als erstes der Reflex BSref an der ersten Seitenfläche OS mittig auf der Detektorfläche 19.1 positioniert werden. Der von der zweiten Seitenfläche US hervorgerufene Reflex BSref kann nur bei einer weiteren Verschiebung in der positiven Richtung entlang der Z-Achse Z mittig justiert werden.

Ist der Querschnitt des Lichtblatts 7 mittig justiert, so ergibt ist das Bild 60 mittig auf der Detektorfläche 19 abgebildet, wie dies in Fig. 7 schematisch dargestellt ist.

In einem Schritt 2 wird das Vorliegen einer Verkippung der ersten Seitenfläche OS um die Y-Achse überprüft, indem eine Winkelabweichung der Ist-Lage von der Soll-Lage ermittelt wird. Die Soll-Lage ist in der Fig. 7 beispielhaft durch eine horizontal über die Detektorfläche 19.1 verlaufende Strich-Punkt-Linie gezeigt. Eine Längsachse des Bilds 60 soll bei Erreichen der Soll-Lage mit der horizontalen Strich-Punkt-Linie gänzlich oder nahezu zusammenfallen. In dem in der Fig. 7 dargestellten Beispiel ist die Längsachse des Bilds 60 gegenüber der Soll-Lage um einen Winkel $\beta$ gekippt. Die aktuelle Ist-Lage des Bildes 60 weicht von der Soll-Lage ab.

Wird eine Winkelabweichung festgestellt, die größer als eine zulässige Winkelabweichung ist, wird die Probenhalterung 7 um die Y-Achse Y rotiert, bis der Winkel $\beta$ minimiert ist.

Anschließend wird überprüft, ob eine Abweichung der Soll-Position von der Ist-Position in Richtung der Z-Achse Z aufgetreten ist. Sollte zum Beispiel infolge der Korrektur der Winkelabweichung eine unzulässige Abweichung der Ist-Position in Richtung der Z-Achse Z vorliegen, wird der oben beschriebene erste Schritt 1 wiederholt. Die Probe liegt nun parallel zur X-Achse.

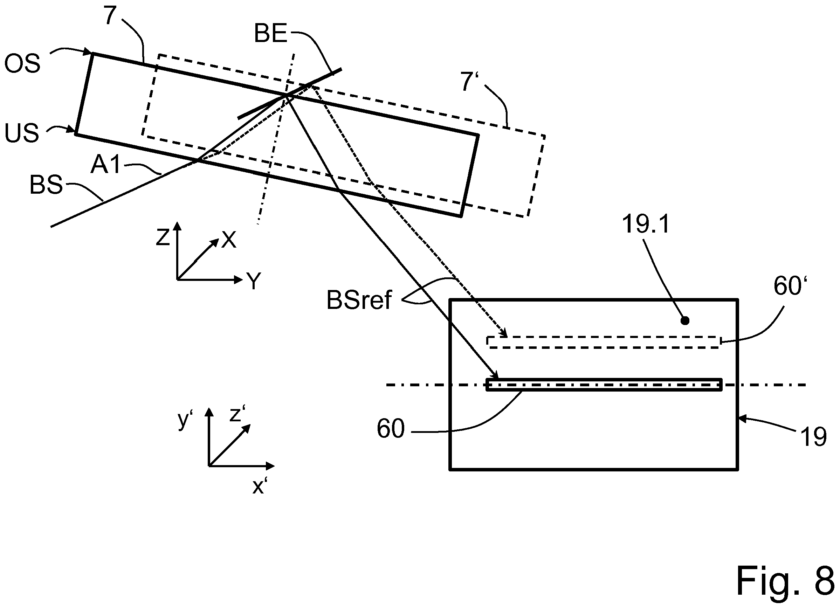

In einem optionalen Schritt 3 wird die Probenhalterung 7, insbesondere die erste Seitenfläche OS, zusätzlich auch parallel zur Y-Achse Y ausgerichtet. Hierzu wird die Probenhalterung 7 entlang der Y-Achse Y verschoben, wie dies schematisch in Fig. 8 gezeigt ist. Wenn die Probenhalterung 7, insbesondere die erste Seitenfläche OS, nicht parallel zur Y-Achse Y ausgerichtet ist, kommt es zu einer Verschiebung des Bilds 60 des Lichtblattquerschnitts auf der Detektorfläche 19.1 in y'-Richtung.

In der Fig. 8 ist die Probenhalterung 7 in einer aktuellen Ist-Position sowie das zugehörige Bild 60 auf der Detektorfläche 19.1 mit Volllinien dargestellt. Eine Ist-Position einer virtuell verschobenen Probenhalterung 7' sowie ein zugehöriges virtuelles Bild 60' des Lichtblattquerschnitts der virtuell verschobenen Probenhalterung 7' sind in Fig. 8 mit Strichlinien umrahmt gezeigt. Gleiches gilt für die jeweils zugehörigen Strahlengänge von Beleuchtungsstrahlung BS und reflektiertem Anteil der Beleuchtungsstrahlung BSref.

Die erste optische Achse A1 bleibt während des Verschiebevorgangs ortsfest. Im Ergebnis ist die erste Seitenfläche OS der verschobenen Probenhalterung 7' um einen Betrag in Richtung der Z-Achse Z versetzt, weshalb das Bild 60' der verschobenen Probenhalterung 7' auf der Detektorfläche 19.1 in Richtung der y'-Achse y' versetzt auftrifft.

Die Ausrichtung der ersten Seitenfläche OS in Richtung der Y-Achse Y wird überprüft, indem die Probenhalterung 7 in Richtung der Y-Achse Y verschoben wird. Wird eine Abweichung von der Richtung der Y-Achse Y durch ein Auswandern des erfassten reflektierten Anteils BSref auf dem Detektor 19, insbesondere auf der Detektorfläche 19.1, festgestellt, wird die Probenhalterung 7 mittels gesteuerter Antriebe beispielsweise des Probentischs 11 um die X-Achse X rotiert bis kein Auswandern mehr auftritt oder ein Auswandern innerhalb einer zulässigen Toleranzgrenze stattfindet.

Durch Verkippen der Probenhalterung 7 um die X-Achse X wird diese nun so ausgerichtet, das während ihres Verschiebens in Richtung der Y-Achse Y kein Auswandern des Bilds 60 des Lichtblattquerschnitts Richtung der y'-Achse y' auftritt. Kommt es hierbei zu einer unzulässigen Verschiebung der Probenhalterung 7 in Richtung der Z-Achse Z, wird Schritt 1 wiederholt.

Die beschriebene Justierung der Probenhalterung 7 kann durch eine Bestimmung der Dicke d beispielsweise des Bodens der Probenhalterung 7 ergänzt werden. Es wird nachfolgend vereinfachend auf die Dicke d des Bodens einer Probenhalterung 7 beziehungsweise auf die Dicke d eines als Probenhalterung 7 verwendeten Deckglases Bezug genommen.

Aberrationen, die bei einem schiefen Durchgang der Beleuchtungsstrahlung BS durch die Probenhalterung 7 auftreten, sind von deren Dicke d abhängig. Aus diesem Grund sind beispielsweise die Alvarezplatten 12 (Fig. 2) verschiebbar in den Beleuchtungsobjektiv 2 und/oder dem Detektionsobjektiv 3 gelagert, um durch eine Verschiebung der Alvarezplatten 12 zueinander eine Aberrationskorrektur auf die Dicke d abzustimmen.

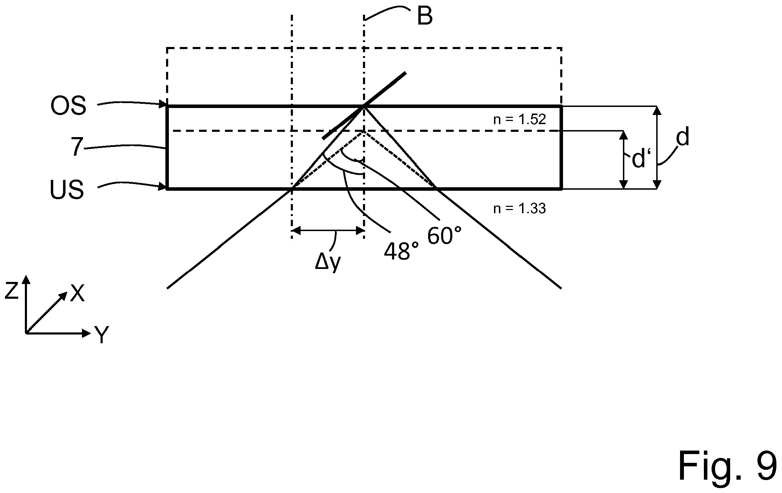

Die Dicke d der Probenhalterung 7 kann anhand der Reflexe BSref von erster und zweiter Seitenfläche OS, US bestimmt werden. In Fig. 9 sind die beiden Reflexe BSref schematisch dargestellt, wobei d die Deckglasdicke und d' die Verschiebung des Deckglases in positiver Richtung entlang der Z-Achse Z ist.

Die Bestimmung der Dicke d wird folgendermaßen durchgeführt:

Zuerst wird die Probenhalterung 7 so eingestellt, das der Reflex BSref von der ersten Seitenfläche OS in der Soll-Lage, beispielsweise mittig, als Bild 60 auf der Detektorfläche 19.1 liegt (siehe Fig. 5, 7, 8) und die Probenhalterung 7 keine Neigung aufweist. Der Winkel zwischen Beleuchtungsstrahlung BS und Bezugachse B beträgt im Beispiel 48°. Die Bezugsachse B verläuft durch die Bildebene BE und durch den vereinfacht dargestellten Auftreffpunkt der Beleuchtungsstrahlung BS auf der ersten Seitenfläche OS. In Richtung der Y-Achse Y ist mit $\Delta y$ eine Strecke zwischen dem Durchtrittspunkt der Beleuchtungsstrahlung BS durch die zweite Seitenfläche US und einem Auftreffpunkt auf der ersten Seitenfläche US bezeichnet.

Dann wird die Probenhalterung 7 in positiver Richtung entlang der Z-Achse Z verschoben, bis der Reflex BSref von der zweiten Seitenfläche US in der Soll-Lage als Bild 60 auf der Detektorfläche 19.1 liegt. Die dazu erforderliche Verschiebestrecke d' wird ermittelt, beispielsweise gemessen oder berechnet. Der Winkel zwischen Beleuchtungsstrahlung BS und Bezugachse B beträgt im Beispiel nun 60°.

Die Dicke d kann nun mittels der folgenden trigonometrischen Beziehungen und der im Beispiel gegebenen Winkel berechnet werden:

$$\tan(60°) = \Delta y/d'$$

$$\tan(48°) = \Delta y/d$$

wobei $\Delta y$ die Strecke zwischen dem Durchgang der Beleuchtungsstrahlung BS und der Bezugsachse B gemessen in Richtung der X-Achse X ist.

Die Dicke d berechnet sich aus d' * tan(60°)/tan(48°).

In weiteren Ausgestaltungen des Verfahrens kann eine Neigungskorrektur zusätzlich oder alternativ erfolgen, indem ein Lichtblatt 6 mit einer Wellenlängen erzeugt wird, die zur Bildgebung nicht verwendet wird, z. B. Infrarot. Dieses Lichtblatt 6 kann permanent oder zu bestimmten Zeitpunkten beispielsweise während eines Experiments genutzt werden, um die Ist-Position der Probenhalterung 7, insbesondere deren Ist-Position in Richtung der Z-Achse Z, zu kontrollieren und gegebenenfalls während des Experiments zu korrigieren. Statt eines Lichtblatts 6 kann auch ein Strahl, beispielsweise ein Gaußstrahl, ein Besselstrahl oder ein Mathieustrahl verwendet werden. Als Detektor 19 kann eine Vier-Quadranten-Diode verwendet werden.

Es kann in nicht zur Erfindung gehörenden Ausgestaltungen ein Autokollimationsfernrohr auf die Probenhalterung 7 gerichtet werden. Eine Schiefstellung der Probenhalterung 7 wird in eine Verschiebung des Reflexes BSref auf dem Detektor 19 des Autokollimationsfernrohrs umgewandelt. Mit diesem Ansatz kann nur der Neigungswinkel justiert werden.

Eine nicht zur Erfindung gehörende Ausgestaltung bedingt einen kollimierten Laser, der auf die Probenhalterung 7 gerichtet wird. Der Laser ist parallel zum Lot, beispielsweise zur Bezugsachse B ausgerichtet. Der Reflex BSref wird beispielsweise mittels eines Strahlteilers oder einer Pol-Optik ausgespiegelt und auf einer Vier-Quadranten-Diode registriert. Mit Hilfe des Signals der Vier-Quadranten-Diode kann nun die Neigung der Probenhalterung 7 eingestellt und korrigiert werden. Eine Einstellung der Ist-Position in Richtung der Z-Achse Z ist mit dieser Ausgestaltung nicht möglich. Die beiden vorgenannten Methoden sind für konventionelle Mikroskopsysteme und Lichtblattmikroskope geeignet.

Es ist ferner in einer weiteren Ausgestaltung des Verfahrens möglich, zusätzlich eine Auswertung nach Bildgütemaß vorzunehmen. So kann beziehungsweise können iterativ die Neigung und/oder die Fokusposition des Detektionsobjektivs 3 verstellt werden um Messwerte des gewählten Bildgütemaßes an gewünschte Messwerte anzunähern oder beispielsweise zu maximieren. Dazu kann die zu vermessende Probe 5 selbst verwendet werden oder es wird das Strahlprofil eines Strahls der gewählten Beleuchtungsstrahlung BS analysiert.

Es ist durchaus möglich, dass der Parameterraum, der iterativ abgeprüft werden muss, zu groß ist, beziehungsweise dass das System nicht iterativ auf das globale Minimum, beispielsweise eine optimale Neigung der Probenhalterung 7 und eine optimale Fokusposition, hin optimiert werden kann, sondern in einem lokalen Minimum verharrt. Es ist daher vorteilhaft, wenn die Methode der Bildgüteauswertung in Kombination mit einer der vorgenannten Ausgestaltungen des Verfahrens ausgeführt wird. Dabei erfolgt zuerst eine Grobeinstellung der Neigung der Probenhalterung 7 und der Ist-Position in Richtung der Z-Achse Z mittels einer der oben beschriebenen Methoden. Im Anschluss wird eine Feineinstellung mittels einer Bildgüteauswertung durchgeführt. Diese Methode ist nicht für konventionelle Mikroskopsysteme geeignet.

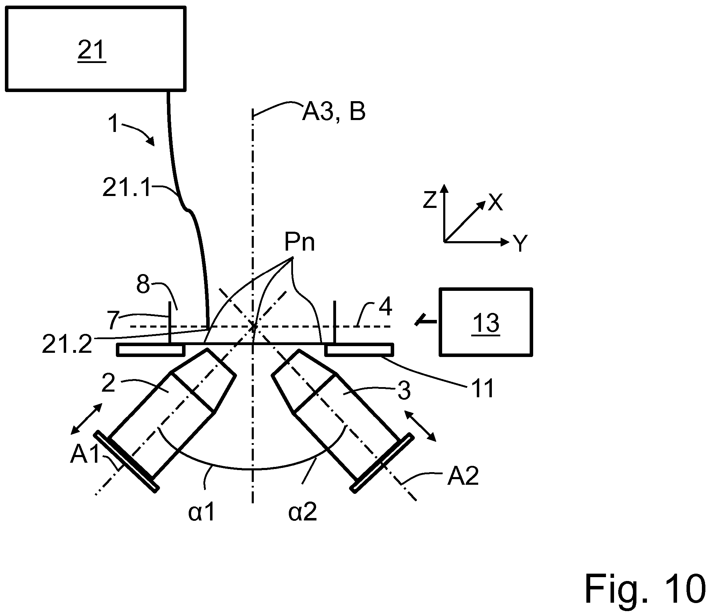

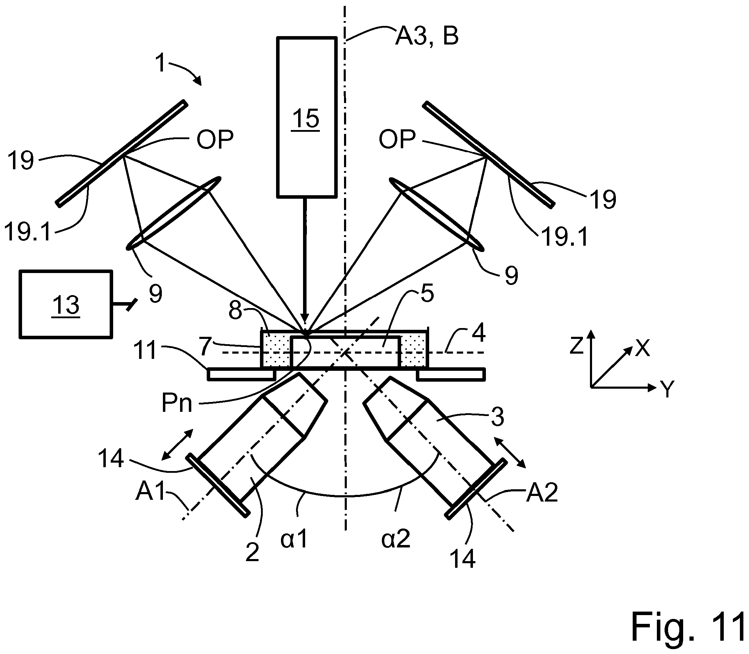

In den Fig. 10 und 11 sind schematisch Ausführungsbeispiele von Anordnungen dargestellt, mittels denen eine Erfassung der Topographie der Probenhalterung 7 möglich ist.

Zur Erfassung der Topographie wird auf einem Bereich der Probenhalterung 7 an mindestens drei Messpunkten Pn die Topographie, das entspricht einer relative Höhe der Probenhalterung 7 an dem jeweiligen Messpunkt Pn, erfasst. Die relative Höhe wird als ein relativer Höhenwert erfasst. Anhand der erfassten relativen Höhenwerte kann die Neigung der Probenhalterung 7 ermittelt werden.

Die Topographie kann mittels eines beispielsweise als Faserinterferometer ausgebildeten Interferometers 21 ermittelt werden. Eine geeignete Anordnung ist stark vereinfacht in Fig. 10 gezeigt. In dem Mikroskop 1 in inverser Anordnung befindet sich auf dem Probentisch 11 die Probenhalterung 7. In einen Messpunkt Pn der Oberseite OS des Bodens der Probenhalterung 7 ist eine lichtleitende Faser 21.1 des Interferometers 21 gerichtet. Mittels der Faser 21.1 ist eine Strahlung durch eine Faseraustrittsfläche 21.2 auf den Messpunkt Pn gerichtet beziehungsweise richtbar. Die an der Probenhalterung 7 und der Faseraustrittsfläche 21.2 auftretenden Reflexionen entstehen beide an Glas-Luft-Übergängen und sind vergleichbar, so dass ein Interferenzsignal mit hoher Modulationstiefe erhalten wird beziehungsweise erhalten werden kann.

In weiteren Ausführungen kann die Faser 21.1 zwischen den Objektiven 2, 3 oder seitlich zu diesen versetzt an die Probenhalterung 7 gebracht werden.

Wenigstens einer der vermessenen Messpunkte Pn kann im Gesichtsfeld des Mikroskops 1 liegen, um eine lokale Deckglasneigung zu erfassen. Das Interferometer 21 kann auch an anderer Stelle positioniert sein und die Probenhalterung 7 nach der Topographiemessung mittels des motorisch beweglichen Probentisches 11 in die Beobachtungsposition gemäß Fig. 10 verschoben werden.

Faserinterferometer können auch parallelisiert eingesetzt werden, d.h. mehrere Fasern 21.1 werden parallel angeordnet und betrieben; sodass simultan ein größerer Bereich der Probenhalterung 7 vermessen werden kann.

Im Fall einer inversen Anordnung kann auch ein klassisches Weitfeld-Interferometer verwendet werden.

Die Methode der Topographiemessung ist sowohl für konventionelle Mikroskopsysteme als auch für Lichtblattmikroskope geeignet.

In einer weiteren möglichen Ausführung wird die Topographie der Probe 5 durch Messung der Schärfe oder eines anderen Bildgütekriteriums der aufliegenden Probe 5 an mindestens drei Punkten und durch eine entsprechende Nachregelung der Abstände mindestens eines der Objektive 2, 3 zur Probe 5 bestimmt und daraus die lokale Deckglasneigung errechnet.

In weiteren möglichen Ausgestaltungen können auf der Probenhalterung 7 aufliegende Nanopartikel (sogenannte Fiducials) oder auf die Probenhalterung 7 aufgebrachte Markierungen als Proben 5 fungieren.

Diese auch als Schärfemessung bezeichnete Methode ist sowohl für konventionelle Mikroskopsysteme als auch für Lichtblattmikroskope geeignet.

Ein weiteres Verfahren der Topographiemessung wird anhand der Fig. 11 erläutert, in der eine Anordnung zur Ermittlung der Topographie der Probenhalterung mittels Triangulation schematisch dargestellt ist.

Zur Ausführung der Triangulation wird ein Messpunkt Pn mittels einer Laserstrahlung eines Lasermoduls 15 beleuchtet und von mindestens zwei voneinander verschiedenen Beobachtungspunkten OP aus, also aus mindestens zwei unterschiedlichen Richtungen, angepeilt. Es werden die Beobachtungswinkel ermittelt, unter denen der jeweilige Messpunkt Pn von einem bestimmten Beobachtungspunkt OP aus angepeilt werden kann.

Als Beobachtungspunkte OP sind in der Fig. 11 beispielhaft Punkte auf den jeweiligen Detektorflächen 19.1 von Detektoren 19 dargestellt, auf die der betreffende Messpunkt Pn mittels einer abbildenden Optik 9 abgebildet wird.

Da die Relativpositionen der Beobachtungspunkte OP bekannt sind und die Beobachtungswinkel ermittelt wurden, können die Koordinaten einer Ist-Positionierung des Messpunktes Pn zweidimensional und/oder dreidimensional in Abhängigkeit von den Beobachtungspunkten OP und den zugehörigen Beobachtungswinkeln ermittelt werden. In einem weiteren Schritt wird in Abhängigkeit der Ist-Positionierung der Messpunkte Pn mittels der Steuereinheit 13 eine Ist-Positionierung der Probenhalterung 7 ermittelt.

Für den dargestellten Fall der Topographiemessung zur Neigungsbestimmung entlang einer Achse ist dabei nur die z-Koordinate des Messpunkts Pn von Bedeutung, so dass eine Anordnung mit einem Interferometer 21 mit zwei Messpunkten Pn, die in einer Ebene senkrecht zur Probenebene 4 ausgerichtet sind, ausreicht. Soll die Lage der Probenhalterung 7 im Raum ermittelt werden, sind drei Messpunkte Pn erforderlich.

Diese Methode ist sowohl für konventionelle Mikroskopsysteme als auch für Lichtblattmikroskope geeignet.

Bezugszeichen

| | |
|---|---|
| 1 | Mikroskop |
| 2 | Beleuchtungsobjektiv |
| 3 | Detektionsobjektiv |
| 4 | Probenebene |
| 5 | Probe |
| 6 | Lichtblatt |
| 60 | Bild (Abbildung/Bild des Lichtblattquerschnitts) |
| 60' | Bild (des Lichtblattquerschnitts bei verschobener Probenhalterung 7') |
| BS | Beleuchtungsstrahlung |
| BSref | reflektierter Anteil (der Beleuchtungsstrahlung BS) |
| DS | Detektionsstrahlung |
| BE | Bildebene |
| 7 | Probenhalterung |
| 7' | virtuell verschobene Probenhalterung 7 |
| 8 | Flüssigkeit |
| 9 | abbildende Optik |
| B | Bezugsachse |
| 10 | Meniskuslinse |
| 11 | Probentisch |
| 12 | Alvarezplatten |
| 13 | Steuereinheit |
| 14 | Objektivantrieb |
| 15 | Lasermodul |

| 16 | Strahlformung |
| 17 | X-Y-Scanner |
| 18 | Immersionsmedium |
| 19 | Detektor |
| 19.1 | Detektorfläche |
| 20 | Weitfeldobjektiv |
| 21 | Interferometer |
| 21.1 | Faser |
| 21.2 | Faseraustrittsfläche |
| NA1 | Numerische Apertur (des Beleuchtungsobjektivs 2) |
| NA2 | Numerische Apertur (des Detektionsobjektivs 3) |
| A1 | erste optische Achse |
| A2 | zweite optische Achse |
| A3 | dritte optische Achse |
| $\alpha1$ | Winkel (zwischen erster und dritter optischer Achse A1, A3) |
| $\alpha2$ | Winkel (zwischen zweiter und dritter optischer Achse A2, A3) |
| d | Abstand, Dicke |
| d' | Verschiebestrecke |
| OS | erste Seitenfläche Oberseite |
| US | zweite Seitenfläche Unterseite |
| Pn | nter Messpunkt |
| Winkel $\beta$ | Winkel zwischen Ist-Lage und Soll-Lage |
| OP | Beobachtungspunkt |
| $\Delta y$ | Strecke (in Richtung der Y-Achse Y) |

## Patentansprüche

1. Verfahren zur Justage einer Probenhalterung (7) im Strahlengang eines Mikroskops (1),

   - bei dem mindestens ein Bündel einer Beleuchtungsstrahlung (BS) auf die Probenhalterung (7) gerichtet wird,
   - ein von der Probenhalterung (7) reflektierter Anteil der Beleuchtungsstrahlung (BSref) mittels eines Detektors (19) erfasst wird und Messwerte der erfassten Beleuchtungsstrahlung (BSref) ermittelt werden,
   - in Abhängigkeit der Messwerte eine aktuelle Ist-Positionierung der Probenhalterung (7) bezüglich des Strahlengangs ermittelt wird,
   - die ermittelte Ist-Positionierung mit einer Soll-Positionierung verglichen wird und
   - Steuerbefehle zur Veränderung der Ist-Positionierung erzeugt werden, durch deren Ausführung die Probenhalterung (7) in die Soll-Positionierung bewegt wird,
   - wobei

     - ein als inverses Mikroskop (1) ausgebildetes Mikroskop (1) verwendet wird, umfassend entweder
     - ein Beleuchtungsobjektiv (2) mit einer ersten optischen Achse (A1), wobei die erste optische Achse (A1) eine durch eine X-Achse (X) und einer zur X-Achse (X) orthogonalen Y-Achse (Y) aufgespannten Probenebene (4) durchstößt,
- oder
- ein zur Erzeugung eines Lichtblatts (6) mittels der Beleuchtungsstrahlung (BS) ausgebildetes Beleuchtungsobjektiv (2) mit einer ersten optischen Achse (A1), wobei das Lichtblatt (6) wenigstens teilweise in einer durch eine X-Achse (X) und einer zur X-Achse (X) orthogonalen Y-Achse (Y) aufgespannten Probenebene (4) erzeugt oder erzeugbar ist,
- und ein zur Detektion von aus der Probenebene (4) kommenden Lichts ausgebildetes Detektionsobjektiv (3) mit einer zweiten optischen Achse (A2),
- wobei
- das Beleuchtungsobjektiv (2) und das Detektionsobjektiv (3) derart zueinander und zur Probenebene (4) ausgerichtet sind, dass sich die erste optische Achse (A1) und die zweite optische Achse (A2) in der Probenebene (4) schneiden und miteinander einen im Wesentlichen rechten Winkel einschließen und
- die erste optische Achse (A1) und die zweite optische Achse (A2) mit einer orthogonal zur Probenebene (4) in Richtung einer Z-Achse (Z) gerichteten und als eine Bezugsachse (B) dienenden dritten Achse (A3) jeweils einen von Null verschiedenen Winkel einschließen, und das Bündel der Beleuchtungsstrahlung (BS) über das Beleuchtungsobjektiv (2) auf die Probenhalterung (7) gerichtet wird und der reflektierte Anteil der Beleuchtungsstrahlung (BSref) über das Detektionsobjektiv (3) auf den Detektor (19) gelangt;
und
in einem Schritt 1
- die einen für die Beleuchtungsstrahlung (BS) transparenten Boden mit einer ersten Seitenfläche (OS) und einer zweiten Seitenfläche (US) aufweisende Probenhalterung (7) in Richtung der Z-Achse (Z) verschoben wird, bis der von der ersten Seitenfläche (OS) des Boden reflektierte Anteil der Beleuchtungsstrahlung (BSref) erfasst wird und die Relativlage der Probenhalterung (7) und des Detektors (19) zueinander so verändert wird, dass eine Ist-Lage des erfassten Anteils (BSref)) einer Soll-Lage auf dem Detektor (19) angenähert wird,
in einem Schritt 2
- das Vorliegen einer Verkippung der ersten Seitenfläche (OS) des Bodens um die Y-Achse (Y) überprüft wird, indem eine Winkelabweichung der Ist-Lage von der Soll-Lage ermittelt wird,

- bei festgestellter Winkelabweichung größer als eine zulässige Winkelabweichung die Probenhalterung (7) um die Y-Achse (Y) rotiert wird, bis die Winkelabweichung minimiert ist und

- Überprüfen eines Auftretens einer Abweichung der Soll-Position von der Ist-Position in Richtung der Z-Achse (Z) und Wiederholen des ersten Schritts 1 bei Auftreten einer unzulässigen Abweichung.

2. Verfahren nach Anspruch 1, **dadurch gekennzeichnet, dass** die Beleuchtungsstrahlung (BS) eine Strahlung mit selbstrekonstruierenden Strahlen ist.

3. Verfahren nach Anspruch 2, **dadurch gekennzeichnet, dass** die Beleuchtungsstrahlung (BS) in Form eines Besselstrahls, eines Coherent Besselstrahls, eines Sectioned Besselstrahl, eines Sinc$^3$-Strahls, eines Airystrahls oder eines Mathieustrahls auf die Probenhalterung (7) gerichtet wird.

4. Verfahren nach einem der vorhergehenden Ansprüche, **dadurch gekennzeichnet, dass** das Lichtblatt (6) mit Beleuchtungsstrahlung (BS) einer Wellenlänge erzeugt wird, die von der Wellenlänge einer für die Bildgebung verwendeten Beleuchtungsstrahlung (BS) verschieden ist.

5. Verfahren nach einem der vorhergehenden Ansprüche, **dadurch gekennzeichnet, dass** in einem Schritt 3

- eine Ausrichtung der ersten Seitenfläche (OS) in Richtung der Y-Achse (Y) überprüft wird, indem die Probenhalterung (7) in Richtung der Y-Achse (Y) verschoben wird und eine Abweichung von der Richtung der Y-Achse (Y) durch ein Auswandern des erfassten reflektierten Anteils (BSref) auf dem Detektor (19) festgestellt wird und

- bei Auftreten des Auswanderns die Probenhalterung (7) um die X-Achse (X) rotiert wird bis kein Auswandern mehr auftritt.

6. Verfahren nach einem der vorhergehenden_Ansprüche, **dadurch gekennzeichnet, dass**

- die justierte Probenhalterung (7) aus einer Ist-Position, in der ein von der ersten Seitenfläche (OS) oder von der zweiten Seitenfläche (US) reflektierter Anteil (BSref) in einer Soll-Lage durch den Detektor (19) erfasst wird, in Richtung der Z-Achse (Z) um eine Verschiebestrecke (d') verschoben wird, bis ein reflektierter Anteil (BSref) der jeweils anderen Seitenfläche (OS, US) in der Soll-Lage erfasst wird und

- in Abhängigkeit von der zurückgelegten Verschiebestrecke (d') in Richtung der Z-Achse (Z) ein Abstand (d) von erster und zweiter Seitenfläche (OS, US) in Richtung der Z-Achse (Z) zueinander ermittelt wird.

7. Verfahren nach Anspruch 1, **dadurch gekennzeichnet, dass**

- von mindestens zwei voneinander verschiedenen Beobachtungspunkten (OP) mindestens ein Messpunkt (Pn) erfasst wird,

- der jeweilige Beobachtungswinkel, unter denen der beobachtete Messpunkt (Pn) von dem jeweiligen Beobachtungspunkt (OP) aus liegt, ermittelt wird,

- eine Ist-Positionierung des Messpunkts (Pn) in Abhängigkeit von den Beobachtungspunkten (OP) und den zugehörigen Beobachtungswinkeln ermittelt wird und

- in Abhängigkeit der Ist-Positionierung des mindestens einen Messpunkts (Pn) die Ist-Positionierung der Probenhalterung (7) ermittelt wird.

## Claims

1. Method for adjusting a specimen holder (7) in the beam path of a microscope (1),

- in which at least one beam of an illumination radiation (BS) is directed at the specimen holder (7),

- a component of the illumination radiation (BSref) reflected by the specimen holder (7) is captured by means of a detector (19) and measurement values of the captured illumination radiation (BSref) are ascertained,

- a current actual manner of positioning of the specimen holder (7) in relation to the beam path is established on the basis of the measurement values,

- the established actual manner of positioning is compared to an intended manner of positioning, and

- control commands for modifying the actual manner of positioning are produced, the execution of which causes the specimen holder (7) to be moved into the intended manner of positioning,

- wherein

- use is made of a microscope (1) embodied as an inverted microscope (1), comprising either

- an illumination objective (2) with a first optical axis (A1), wherein the first optical axis (A1) intersects a specimen plane (4) that is spanned by an X-axis (X) and a Y-axis (Y) orthogonal to the X-axis (X),
- or
- an illumination objective (2) with a first optical axis (A1), embodied to produce a light sheet (6) by means of the illumination radiation (BS), wherein the light sheet (6) is produced or producible, at least in part, in a specimen plane (4) that is spanned by an X-axis (X) and a Y-axis (Y) orthogonal to the X-axis (X),
- and a detection objective (3), embodied to detect light coming from the specimen plane (4), with a second optical axis (A2),
- wherein
- the illumination objective (2) and the detection objective (3) are aligned relative to one another and relative to the specimen plane (4) in such a way that the first optical axis (A1) and the second optical axis (A2) intersect in the specimen plane (4) and include a substantially right angle therebetween, and
- the first optical axis (A1) and the second optical axis (A2) each include an angle that differs from zero with a third axis (A3) that is directed orthogonally to the specimen plane (4) in the direction of a Z-axis (Z) and that serves as a reference axis (B), and the beam of the illumination radiation (BS) is directed at the specimen holder (7) via the illumination objective (2) and the reflected component of the illumination radiation (BSref) reaches the detector (19) via the detection objective (3);
and
in a step 1,
- the specimen holder (7), which has a base transparent to the illumination radiation (BS) with a first side face (OS) and second side face (US), is displaced in the direction of the Z-axis (Z) until the component of the illumination radiation (BSref) reflected by the first side face (OS) of the base is captured and the relative position of the specimen holder (7) and of the detector (19) in relation to one another is modified in such a way that an actual relative position of the captured component (BSref) approximates an intended relative position on the detector (19),
in a step 2,
- the presence of a tilt of the first side face (OS) of the base about the Y-axis (Y) is checked by virtue of establishing an angle deviation of the actual relative position from the intended relative position,
- should an angle deviation that is greater than an admissible angle deviation be determined the specimen holder (7) is rotated about the Y-axis (Y) until the angle deviation is minimized, and
- an occurrence of a deviation of the intended position from the actual position in the direction of the Z-axis (Z) is checked and the first step 1 is repeated if an inadmissible deviation occurs.

2. Method according to Claim 1, **characterized in that** the illumination radiation (BS) is a radiation with selfreconstructing rays.

3. Method according to Claim 2, **characterized in that** the illumination radiation (BS) is directed in the form of a Bessel beam, a coherent Bessel beam, a sectioned Bessel beam, a sinc$^3$ beam, an Airy beam, or a Mathieu beam at the specimen holder (7).

4. Method according to any one of the preceding claims, **characterized in that** the light sheet (6) is produced with illumination radiation (BS) of a wavelength that differs from the wavelength of an illumination radiation (BS) used for the imaging.

5. Method according to any one of the preceding claims, **characterized in that** in a step 3,

   - an alignment of the first side face (OS) in the direction of the Y-axis (Y) is checked by virtue of the specimen holder (7) being displaced in the direction of the Y-axis (Y) and a deviation from the direction of the Y-axis (Y) being determined by a migration of the captured reflected component (BSref) on the detector (19), and
   - should migration occur the specimen holder (7) is rotated about the X-axis (X) until migration no longer occurs.

6. Method according to any one of the preceding claims, **characterized in that**

   - the adjusted specimen holder (7) is displaced in the direction of the Z-axis (Z) along a displacement path (d') from an actual position, in which a component (BSref) reflected from the first side face (OS) or from the second side face (US) is captured by the detector (19) in an intended relative position, until a reflected component (BSref) of the respective other side face (OS, US) is captured in the intended relative position, and
   - a distance (d) between a first and a second side face (OS, US) in the direction of the Z-axis (Z) is established on the basis of the traversed displacement path (d') in the direction of the Z-axis (Z).

7. Method according to Claim 1, **characterized in that**

- at least one measurement point (Pn) is captured from at least two observation points (OP) that differ from one another,
- the respective observation angle, at which the observed measurement point (Pn) lies from the respective observation point (OP), is established,
- an actual manner of positioning of the measurement point (Pn) is established on the basis of the observation points (OP) and the associated observation angles, and
- the actual manner of positioning of the specimen holder (7) is established on the basis of the actual manner of positioning of the at least one measurement point (Pn).

## Revendications

1. Procédé permettant d'ajuster un porte-échantillon (7) sur le trajet optique d'un microscope (1),

- dans lequel au moins un faisceau d'un rayonnement d'éclairage (BS) est dirigé sur le porte-échantillon (7),
- une fraction du rayonnement d'éclairage (BSref) réfléchie par le porte-échantillon (7) est détectée au moyen d'un détecteur (19), et des valeurs de mesure du rayonnement d'éclairage (BSref) détecté sont déterminées,
- en fonction des valeurs de mesure, un positionnement réel actuel du porte-échantillon (7) par rapport au trajet optique est déterminé,
- le positionnement réel déterminé est comparé à un positionnement théorique, et
- des instructions de commande pour modifier le positionnement réel sont générées dont l'exécution permet de déplacer le porte-échantillon (7) dans le positionnement théorique,
- dans lequel

- un microscope (1) réalisé sous la forme d'un microscope inversé (1) est utilisé, comprenant soit
- un objectif d'éclairage (2) ayant un premier axe optique (A1), le premier axe optique (A1) passant à travers un plan d'échantillon (4) défini par un axe X (X) et un axe Y (Y) orthogonal par rapport à l'axe X (X),
- soit
- un objectif d'éclairage (2) réalisé pour générer une lame de lumière (6) au moyen du rayonnement d'éclairage (BS) et ayant un premier axe optique (A1), la lame de lumière (6) étant ou pouvant être générée au moins partiellement dans un plan d'échantillon (4) défini par un axe X (X) et un axe Y (Y) orthogonal par rapport à l'axe X (X),

- et un objectif de détection (3) réalisé pour détecter la lumière provenant du plan d'échantillon (4) et ayant un deuxième axe optique (A2),
- dans lequel
- l'objectif d'éclairage (2) et l'objectif de détection (3) sont orientés l'un par rapport à l'autre et par rapport au plan d'échantillon (4) de telle sorte que le premier axe optique (A1) et le deuxième axe optique (A2) s'intersectent dans le plan d'échantillon (4) et forment ensemble un angle substantiellement droit, et
- le premier axe optique (A1) et le deuxième axe optique (A2) forment avec un troisième axe (A3) dirigé de manière orthogonale par rapport au plan d'échantillon (4) en direction d'un axe Z (Z) et servant d'axe de référence (B) respectivement un angle différent de zéro, et le faisceau du rayonnement d'éclairage (BS) est dirigé par l'objectif d'éclairage (2) sur le porte-échantillon (7) et la fraction réfléchie du rayonnement d'éclairage (BSref) atteint le détecteur (19) en passant par l'objectif de détection (3) ;
et
dans une étape 1
- le porte-échantillon (7) présentant un fond transparent au rayonnement d'éclairage (BS) et doté d'une première surface latérale (OS) et d'une deuxième surface latérale (US) est décalé en direction de l'axe Z (Z) jusqu'à ce que la fraction du rayonnement d'éclairage (BSref), réfléchie par la première surface latérale (OS) du fond, soit détectée, et la position relative du porte-échantillon (7) et du détecteur (19) l'un par rapport à l'autre est modifiée de façon à approcher une position réelle de la fraction détectée (BSref) d'une position théorique sur le détecteur (19),
dans une étape 2
- la présence d'un basculement de la première surface latérale (OS) du fond autour de l'axe Y (Y) est vérifiée en ce qu'un écart d'angle de la position réelle par rapport à la position théorique est déterminé,
- dans le cas d'un écart d'angle constaté supérieur à un écart d'angle admissible, le porte-échantillon (7) est amené à tourner autour de l'axe Y (Y) jusqu'à ce que l'écart d'angle soit minimisé, et
- une apparition d'un écart de la position théorique par rapport à la position réelle en direction de l'axe Z (Z) est vérifiée, et la première étape 1 est répétée en cas d'apparition d'un écart inadmissible.

2. Procédé selon la revendication 1, **caractérisé en ce que** le rayonnement d'éclairage (BS) est un rayonnement avec des rayons autoreconstituants.

**3.** Procédé selon la revendication 2, **caractérisé en ce que** le rayonnement d'éclairage (BS) est dirigé sur le porte-échantillon (7) sous la forme d'un faisceau de Bessel, d'un faisceau de Bessel cohérent, d'un faisceau de Bessel tronqué, d'un faisceau sinc³, d'un faisceau d'Airy ou d'un faisceau de Mathieu.

**4.** Procédé selon l'une quelconque des revendications précédentes, **caractérisé en ce que** la lame de lumière (6) est générée avec un rayonnement d'éclairage (BS) d'une longueur d'onde différente de la longueur d'onde d'un rayonnement d'éclairage (BS) utilisé pour l'imagerie.

**5.** Procédé selon l'une quelconque des revendications précédentes, **caractérisé en ce que** dans une étape 3

- une orientation de la première surface latérale (OS) en direction de l'axe Y (Y) est vérifiée **en ce que** le porte-échantillon (7) est décalé en direction de l'axe Y (Y), et un écart par rapport à la direction de l'axe Y (Y) est constaté par une dérive de la fraction réfléchie détectée (BSref) sur le détecteur (19), et
- en cas d'apparition de la dérive, le porte-échantillon (7) est amené à tourner autour de l'axe X(X) jusqu'à ce que plus aucune dérive n'apparaisse.

**6.** Procédé selon l'une quelconque des revendications précédentes, **caractérisé en ce que**

- le porte-échantillon (7) ajusté est décalé à partir d'une position réelle, dans laquelle une fraction réfléchie (BSref) par la première surface latérale (OS) ou par la deuxième surface latérale (US) dans une position théorique est détectée par le détecteur (19), en direction de l'axe Z (Z) sur un trajet de décalage (d') jusqu'à ce qu'une fraction réfléchie (BSref) de l'autre surface latérale respectivement (OS, US) soit détectée dans la position théorique, et
- en fonction du trajet de décalage (d') parcouru en direction de l'axe Z (Z), une distance (d) de la première et de la deuxième surface latérale (OS, US) en direction de l'axe Z (Z) l'une par rapport à l'autre est déterminée.

**7.** Procédé selon la revendication 1, **caractérisé en ce que**

- au moins un point de mesure (Pn) est détecté à partir d'au moins deux points d'observation (OP) différents l'un de l'autre,
- l'angle d'observation respectif sous lequel le point de mesure observé (Pn) se trouve à partir du point d'observation respectif (OP) est déterminé,
- un positionnement réel du point de mesure (Pn) est déterminé en fonction des points d'observation (OP) et des angles d'observation associés, et
- en fonction du positionnement réel du au moins un point de mesure (Pn), le positionnement réel du porte-échantillon (7) est déterminé.

Fig. 1b
Stand der Technik

Fig. 1a
Stand der Technik

Fig. 2

EP 3 479 157 B1

Fig. 3

Fig. 4

Fig. 5

EP 3 479 157 B1

Fig. 6

EP 3 479 157 B1

Fig. 7

EP 3 479 157 B1

Fig. 8

Fig. 9

EP 3 479 157 B1

EP 3 479 157 B1

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3305294 A
- US 20080111911 A1
- WO 2010135323 A1
- DE 102013107297 A1
- DE 102007046601 A1
- DE 102008007178 A1

**In der Beschreibung aufgeführte Nicht-Patentliteratur**

- **MCGORTY et al.** Open-top selective plane illumination microscope for conventionally mounted specimens. *OPTICS EXPRESS,* 2015, vol. 23, 16142-16153
- **GUTIERREZ-VEGA, J. C. et al.** Experimental demonstration of optical Mathieu beams. *Optics Communications,* 2001, vol. 195, 35-40